# EUROPÄISCHE PATENTSCHRIFT

(11) **EP 0 864 445 B1**
(45) Veröffentlichungstag und Bekanntmachung des Hinweises auf die Patenterteilung: **07.05.2003**
(21) Anmeldenummer: 98890063.5
(22) Anmeldetag: 10.03.1998
(51) Int. Cl.: B60B 17/00

(54) **Gummigefedertes Schienenrad**
Rubber-sprung railroad wheel
Roue pour rail amortie élastiquement par du caoutchouc

(30) Priorität: 12.03.1997 AT 42597
(43) Veröffentlichungstag der Anmeldung: 16.09.1998
(73) Patentinhaber: Wiener Stadtwerke, 1011 Wien (AT)
(72) Erfinder: Pongracz, Roman, Dipl.-Ing., 1110 Wien (AT); Hauenschild, Rudolf, Ing., 1110 Wien (AT)
(74) Vertreter: Weinzinger, Arnulf, Dipl.-Ing.

(56) Entgegenhaltungen:
- EP-A- 0 679 540
- EP-A- 0 733 493
- DE-A- 4 125 885
- DE-A- 4 430 342
- FR-A- 2 734 763
- US-A- 3 980 333

## Beschreibung

Die Erfindung betrifft ein gummigefedertes Schienenrad mit einem inneren Radkörper, der Speichen aufweist, und mit einem äußeren Radreifen, der mit dem Radkörper über Federelemente verbunden ist.

Aus der US 3 980 333 A (= AT 336 077 B) ist ein gummigefedertes Schienenrad bekannt, bei dem zwischen einem äußeren Radreifen und einem inneren Radkörper in Nuten zwischen Randschultern vorgespannte Gummikörper in Umfangsrichtung aneinandergereiht eingelegt sind. Dabei wird, wie dies an sich bei derartigen gefederten Schienenrädern erwünscht ist, eine verbesserte axiale Führung dadurch erzielt, daß die die Nuten an den beiden Radseiten begrenzenden Schultern unterschiedlich hoch sind, so daß die Trennlinie zwischen Radreifen und Radkörper an den beiden Radseiten auf verschiedenen Radien verläuft. Die Gummikörper können im Schnitt gesehen außer rechteckig auch V-förmig ausgebildet sein, um so die axiale Federung vergleichsweise härter zu gestalten. Problematisch ist bei diesem bekannten Schienenrad jedoch die Montage und insbesondere die Demontage, da die verschiedenen Teile - Radreifen, Gummikörper und Radkörper - einfach ineinander gepreßt sind. Für eine erleichterte Montage und Demontage ist daher bereits vorgeschlagen worden, s. beispielsweise EP 679 540 A, im Querschnitt V-förmige Gummikörper zwischen einem Radkörper und einem äußeren Radreifen dadurch demontierbar anzubringen, daß am Radkörper ein Felgenring einseitig mit Hilfe von Bolzen abnehmbar befestigt wird. Ein bei diesem Schienenrad noch immer vorhandener Nachteil ist, daß die Gefahr eines Durchrutschens des Radreifens relativ zum Radkörper in Umfangsrichtung gegeben ist. Ein weiterer Nachteil liegt in der fehlenden axialen Federwegbegrenzung.

In der nächstkommenden DE 44 30 342 A ist weiters ein gummigefedertes Schienenrad beschrieben, bei dem die Federelemente in Ringräumen zwischen einem Steg des Radreifens und beidseits davon vorhandenen Schultern des Radkörpers, insbesondere entsprechend einem "V", das mit der Spitze radial auswärts weist, angeordnet sind. Dabei ist die Anordnung der - vorgespannten - Federelemente derart getroffen, daß im Betrieb ein "hängendes Schienenrad" erhalten wird, wobei im Schienenbereich die Federelemente entlastet, im Zenitbereich die Federelemente zusätzlich komprimiert werden. Dadurch soll im Schienenbereich eine geringere Schallabstrahlung erhalten werden. Abgesehen von Problemen mit der mechanischen Festigkeit ist jedoch hier ebenfalls die Gefahr eines Durchrutschens in Umfangsrichtung gegeben, und überdies ist durch die weichen Federelemente im Schienenbereich die Seitenstabilität des Radkörpers in diesem Schienenbereich in Frage gestellt.

Aus der DE 41 25 885 A1 ist schließlich ein gummigefedertes Schienenrad der eingangs erwähnten Art bekannt, bei dem ein innerer Radkörper mit Speichen und einem Speichenreifen sowie ein äußerer Radreifen vorgesehen sind, zu dessen Abfederung relativ zum Speichenreifen eine Hartgummieinlage radial an der Außenseite des Speichenreifens anvulkanisiert ist. Die seitliche Halterung der Hartgummieinlage erfolgt einerseits durch einen am Radreifen vorgesehenen Steg und andererseits durch einen in den Radreifen eingelassenen Sprengring. Auch bei diesem Schienenrad besteht die Gefahr eines Durchrutschens des Radreifens relativ zum Speichenreifen in Umfangsrichtung, und überdies ist die Montage problematisch, da die einzelnen Teile wiederum ineinandergepreßt werden müssen.

Ziel der Erfindung ist es nun, ein gummigefedertes Schienenrad der eingangs angeführten Art vorzusehen, bei dem ein Durchrutschen des Radreifens relativ zum Radkörper in Umfangsrichtung verhindert wird, und bei dem die Charakteristik der Axialfederung des Radreifens relativ zum Radkörper je nach Einsatzzweck in weiten Grenzen variiert werden kann; weiters soll das vorliegende Schienenrad leicht montierbar und auch geräuscharm sein, und es sollen die Federwege in einfacher Weise begrenzt werden können.

Das erfindungsgemäße gummigefederte Schienenrad der eingangs angegebenen Art ist dadurch gekennzeichnet, daß Mitnehmer, die mit dem Radreifen verbunden sind, jeweils zwischen zwei Speichen des sternförmigen Radkörpers ragen, und daß die Federelemente unter federnder Abstützung der Mitnehmer an den Flanken der Speichen anliegen. Mit einer derartige Ausbildung wird der vorstehenden Zielsetzung in vorteilhafter Weise entsprochen, und es wird ein gummigefedertes Schienenrad erhalten, bei dem ein Durchrutschen des Radreifens relativ zum Radkörper zufolge des Eingriffs der Mitnehmer zwischen die Speichen oder Sternarme des Radkörpers verhindert ist. Ein weiterer Vorteil ist darin gelegen, daß durch die angegebene Federelement-Anordnung zwischen den Speichen und den Mitnehmern ein vergleichsweise geräuscharmer Lauf des Schienenrades im Betrieb ermöglicht wird. Die Federelemente können dabei V-förmig ausgebildet bzw. V-förmig angeordnet und in axialer Richtung so orientiert sein, daß eine harte Federcharakteristik in axialer Richtung erzielt werden kann, wogegen in radialer Richtung eine weiche Federcharakteristik erhalten wird. Die Axialfederung des Radreifens am Radkörper kann aber nichtsdestoweniger von relativ starr bis relativ weich, mit oder ohne Seitenanschläge(n) zwecks Federwegbegrenzung, ausgelegt werden. Durch die Anordnung der Federelemente, insbesondere Metallgummifedern, an den Flanken der Sternarme oder Speichen, wobei die Federelemente auf Druck und doppelten Schub beansprucht werden, sind im Vergleich zu den bekannten Schienenrädern auch größere - radiale - Federwege möglich. Die erzielte große Keilwirkung kann über die entsprechend massiv dimensionierbaren Speichen gut abgefangen werden.

An sich könnten die Speichen des Radkörpers eine konstante Breite, in Umfangsrichtung gesehen, aufweisen, wobei an ihren in Umfangsrichtung weisenden Flanken die Federelemente angeordnet werden. Für eine effiziente federnde Abstützung in radialer Richtung ist es jedoch von besonderem Vorteil, wenn die Speichen zumindest in jenen Bereichen, wo die Federelemente anliegen, radial auswärts in ihrer Breite, in Umfangsrichtung gesehen, abnehmen.

Je nach Verlauf der Speichen und Ausbildung der Federelemente kann es genügen, die Federelemente nur an den Flanken der Speichen vorzusehen, oder aber es wird mit Vorteil eine Anordnung getroffen, bei der der Radkörper die Mitnehmer auch in den Zwischenzonen zwischen seinen Speichen über Federelemente abstützt. Bei einer derartigen Ausbildung werden die an den Flanken der Speichen vorgesehenen Federelemente hinsichtlich der Beanspruchung auf Schub dadurch entlastet, daß im radial innenliegenden Zwischenraum zwischen den Speichen, de facto an der Außenseite der "Nabe" des durch den sternförmigen Radkörpers gebildeten Speichenrades, eine federnde Abstützung zusätzlich vorliegt, wobei dort die Federelemente im Betrieb in erster Linie auf Druck beansprucht werden. Dabei kann es aus Herstellungsgründen zweckmäßig sein, wenn die Zwischenzonen allgemein geradlinig verlaufen und die Mitnehmer über gesonderte - geradlinige - Federelemente abstützen. Andererseits kann für eine einfache Montage sowie eine gleichmäßige Abfederung auch vorgesehen werden, daß die Zwischenzonen jeweils bogenförmig verlaufen und stetig in die benachbarten Speichen übergehen, wobei weiters vorzugsweise jeweils ein bogenförmig entlang den einander zugewandten Flanken der Speichen sowie der zugehörigen Zwischenzone verlaufendes Federelement vorgesehen ist.

Als Mitnehmer könnten an sich den Speichen des Radkörpers vergleichbare radiale, speichenartige, vom Radreifen einwärts ragende Arme vorgesehen werden, die jeweils an einer Seite einer Speiche des Radkörpers, in Umfangsrichtung gesehen, anliegen. Aus Festigkeitsgründen wird jedoch bevorzugt, daß die Mitnehmer durch mit dem Radreifen verbundene, z.B. verschraubte, Segmente gebildet sind. Die Mitnehmer-Segmente können dabei bevorzugt den gesamten Zwischenraum zwischen jeweils zwei aufeinanderfolgenden Speichen ausfüllen, sieht man von Vertiefungen oder Ausnehmungen ab, die in den Segmenten zwecks Gewichtseinsparung vorgesehen werden können.

Für eine hohe mechanische Festigkeit können die Segmente dabei einteilig sein, und um hierbei eine Montage und Demontage auf einfache Weise zu ermöglichen, ist es von besonderem Vorteil, wenn die einteilig ausgebildeten Segmente mit einem radial äußeren Steg-Fortsatz an einem flanschartigen, radial innenseitigen Ansatz des Radreifens seitlich anliegen und durch einen auf der gegenüberliegenden Seite am Steg-Fortsatz anliegenden Ring in Position gehalten sind. Hierbei ist es weiters auch vorteilhaft, wenn die Speichen mit stirnseitigen Federweg-Begrenzungsanschlägen, z.B. mit stirnseitig eingeschraubten Bolzen, versehen sind, die zwischen dem flanschartigen Ansatz des Radreifens und dem Ring aufgenommen sind und im Ruhezustand in radialem Abstand von der radialen Innenseite des Radreifens enden. Dadurch kann im Extremfall in konstruktiv einfacher Weise, und ohne die einfache Montierbarkeit bzw. Demontierbarkeit zu beeinträchtigen, auch eine Federwegbegrenzung für die radiale Federung für extreme Radiallasten erzielt werden, wobei überdies dann, wenn Schraubenbolzen verwendet werden, eine Einjustierung der Federwegbegrenzung durch entsprechende Auswahl von Bolzen mit weniger hohen oder höheren Bolzenköpfen oder aber gegebenenfalls auch durch entsprechend weites Einschrauben der Bolzen möglich ist. Vor allem können die Begrenzungsanschläge bzw. Bolzen zur axialen Federwegbegrenzung eingesetzt werden, indem sie gegen den flanschartigen Ansatz am Radreifen bzw. am Ring zum Anschlag kommen.

Um andererseits die Notwendigkeit eines gesonderten Ringes für die Montage der Segmente am Radreifen zu vermeiden, ist es auch von Vorteil, wenn jeder Mitnehmer durch zwei miteinander und mit dem Radreifen verbundene, z.B. verschraubte, Segmentteile gebildet ist. Bei dieser Ausführungsform kann die Montage des Schienenrades, d.h. des Radreifens am Radkörper unter Zwischenlage der Federelemente, einfach dadurch bewerkstelligt werden, daß die geteilten Segmente bei der Montage miteinander und mit dem Radreifen verbunden werden. Um dabei die Montage weiter zu erleichtern sowie im montierten Zustand einen besonders festen, steifen Verbund zu erzielen, ist es hier weiters günstig, wenn die Segmentteile durch Stege an der radialen Innenseite des Radreifens sowie an zumindest einigen Federelementen, an deren den Segmentteilen zugekehrter Seite, in Abstand voneinander gehalten sind. Auch ist es hier vorteilhaft, wenn an der radial äußeren Stirnseite der Speichen auf einer Radseite, vorzugsweise auf jener, auf der der Radreifen mit einem Spurkranz versehen ist, eine radiale Verlängerung in axialem Abstand vom Radreifen-Steg vorgesehen ist, die im Betrieb zur axialen Federwegbegrenzung gegen den Radreifen-Steg anlegbar ist.

Für eine einfache Montage unter Gewährleistung einer besonders steifen, stabilen Konstruktion ist es andererseits auch noch von Vorteil, wenn die Mitnehmer bzw. Segmente über zumindest eine Ringwand mit dem Radreifen verbunden sind. Dabei ist es für die Übertragung hoher Kräfte bzw. Momente überdies günstig, wenn die Segmente mit ihnen einstückige, z.B. Drehzapfen-artige axiale Vorsprünge haben oder auf gesonderten Drehzapfen sitzen, und diese axialen Vorsprünge oder Drehzapfen in axialen Bohrungen der Ringwand aufgenommen sind. Für eine bündige Ausbildung unter direkter Krafteinleitung in den Radreifen ist es ferner günstig, wenn die Ringwand mit dem Radreifen im Bereich eines Absatzes an diesem verschraubt ist. Andererseits hat es sich auch als zweckmäßig erwiesen, wenn zwei zueinander allgemein parallele Ringwände, je eine an einer Radseite, vorgesehen sind, die zusammen einen im Querschnitt allgemein U-förmigen Felgenring bilden und hierfür im Bereich des U-Steges axial miteinander verbunden, insbesondere verschraubt, sind. Auf diesem Felgenring kann der äußere Ringreifen beispielsweise in einem herkömmlichen Schrumpfsitz oder aber in bekannter Weise unter Zwischenlage von Gummikörpern aufgebracht sein.

Von Vorteil ist es weiters bei den zuletztgenannten Ausführungsformen, wenn die bzw. zumindest eine Ringwand eine axiale Federweg-Begrenzungswand für die Speichen bildet.

Im Hinblick darauf, daß die Ringwand bzw. -wände eine axiale Begrenzung zwischen Radkörper und Radreifen ergibt bzw. ergeben, kann es zwecks Materialschonung auch von Vorteil sein, wenn zwischen den Speichen und der bzw. den Ringwänden Seitengleitelemente angeordnet sind. Diese Seitengleitelemente oder Seitenanschläge können aus verschleißarmem, selbstschmierendem Material gefertigt sein, und sie können beispielsweise auf der Ringwandinnenseite, besser auf verlängerten und abgewinkelten Trägerblechen der Federelemente angebracht sein. Von besonderem Vorteil ist es hier für die Montage, wenn die Seitengleitelemente zusammen mit den Federelementen jeweils ein sich, gegebenenfalls radial auswärts verjüngendes, auf die entsprechende Speiche aufgeschobenes Rohr bilden.

Im Fall der axialen Bewegungsbegrenzung durch die Ringwände können auch einfache Querschnittsformen für die Speichen und die Federelemente (sowie entsprechend auch die Schmalseiten der Mitnehmer) vorgesehen werden, und es ist demgemäß günstig, wenn die Speichen im Querschnitt rechteckig sind und die Federelemente im Querschnitt geradlinig verlaufen.

Andererseits kann dann, wenn keine axiale Bewegungsbegrenzung durch derartige Ringwände vorgesehen wird, eine Begrenzung der Relativbewegung in axialer Richtung durch eine entsprechende V-Anordnung von Speichen, Federelementen und Mitnehmern erzielt werden. Die Speichen können demgemäß bevorzugt in ihrer Mitte, entsprechend einer durch die Radmitte verlaufenden Mittenebene senkrecht auf die Radachse, ihre größte Dicke haben und von dort zu den beiden Radseiten hin sich in der Dicke verringern, so daß eine Art sechseckförmiger Querschnitt erhalten wird, und an den so konvex ausgebildeten Speichen liegen seitlich, d.h. an deren in Umfangsrichtung weisenden Flanken, im Querschnitt in Form eines flachen V ausgebildete Federelemente an; in entsprechender Weise können die Mitnehmer an ihren den Speichen zugewandten Flächen eine seichte V-förmige konkave Kontur der Profilierung aufweisen.

Die Erfindung wird nachfolgend an Hand von bevorzugten Ausführungsbeispielen, auf die sie jedoch nicht beschränkt sein soll, noch weiter erläutert.

Im einzelnen zeigen:
Fig.1 eine teilweise abgebrochene Ansicht eines gummigefederten Schienenrades;
Fig.2 einen Schnitt gemäß der Linie II-II in Fig.1;
Fig.3 einen Radialschnitt durch dieses Schienenrad gemäß der Linie III-III in Fig.1;
Fig.4 einen anderen Radialschnitt durch dieses Schienenrad, gemäß der Linie IV-IV in Fig.1;
Fig.5 in einer der Ansicht gemäß Fig.1 entsprechenden Ansicht eine andere Ausführungsform des gummigefederten Schienenrades gemäß der Erfindung;
die Fig.6, 7 und 8 den Schnittdarstellungen von Fig.2, 3 und 4 entsprechende Schnittdarstellungen gemäß den Linien VI-VI, VII-VII bzw. VIII-VIII in Fig.5;
die Fig.9 bis 12 in einer entsprechenden Ansicht bzw. in entsprechenden Schnittdarstellungen ein weiteres gummigefedertes Schienenrad nach der Erfindung, mit den Schnittführungen X-X, XI-XI bzw. XII-XII für die Fig.10, 11 und 12, wobei überdies in Fig.9 die Ansicht teilweise, entsprechend der Linie IX-IX in Fig.11, aufgeschnitten dargestellt ist;
die Fig.13 bis 16 in entsprechenden Darstellungen, zum Teil gemäß den Schnittlinien XIV-XIV, XV-XV, XVI-XVI (Fig.13) bzw. XIII-XIII (Fig.15), eine weitere Ausführungsform des vorliegenden gummigefederten Schienenrades;
die Fig.17 bis 20 eine fünfte Ausführungsform des gummigefederten Schienenrades, in entsprechender Ansicht bzw. in entsprechenden Schnittdarstellungen, gemäß den Schnittlinien XVIII-XVIII, XIX-XIX, XX-XX in Fig.17 bzw. XVII-XVII in Fig.19; und
die Fig. 21 und 22 in Schnittdarstellungen ähnlich jener von Fig.18 zwei hinsichtlich der Federelemente modifizierte Ausführungsbeispiele, bei denen Seitengleitelemente für die Speichen des Radkörpers vorgesehen sind.

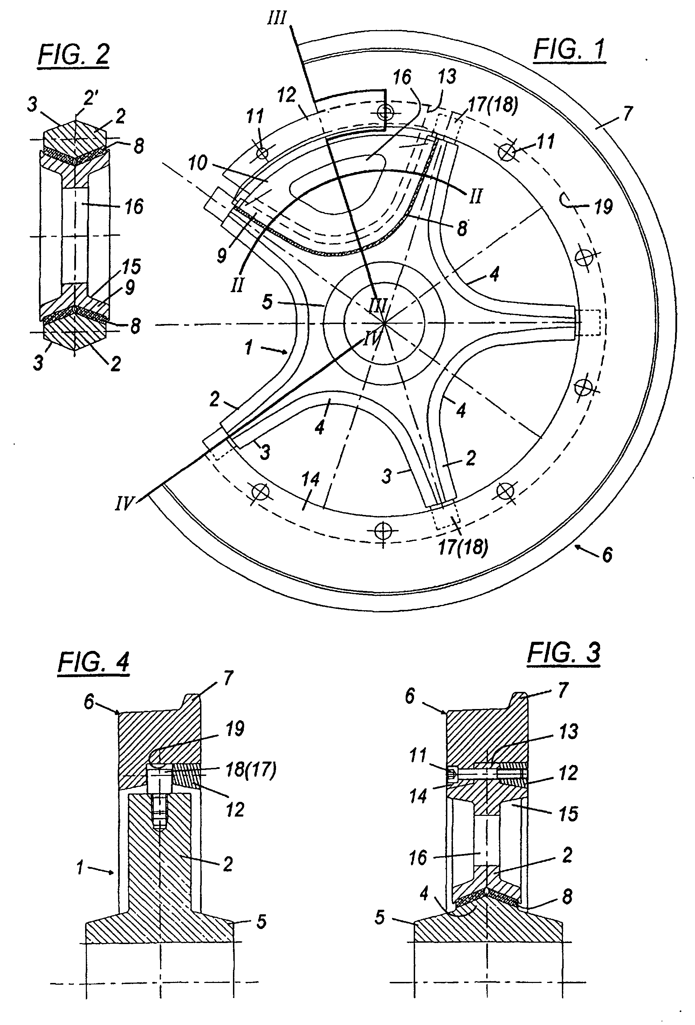

Das in den Fig.1 bis 4 veranschaulichte gummigefederte Schienenrad, auch Speichenrad genannt, besitzt einen sternförmigen Radkörper 1, der beispielsweise mit fünf in gleichen Winkeln zueinander angeordneten Sternarmen oder Speichen 2 ausgebildet ist, welche eine sich radial auswärts vermindernde Breite, in Umfangsrichtung gesehen, aufweisen, wie aus Fig.1 unmittelbar zu ersehen ist. Die in Umfangsrichtung zeigenden Flanken 3 der Speichen 2 sind jeweils mit der gegenüberliegenden Speichenflanke über bogenförmige Zwischenzonen 4, mit entsprechendem Ausrundungsradius, miteinander verbunden, und die Speichen 2 sind, ebenso wie die Zwischenzonen 4, an den Flanken 3 beidseits abgeschrägt ausgebildet, wie insbesondere auch aus Fig.2 bzw. Fig.3 ersichtlich ist, wobei eine konvexe Profilierung in Form eines flachen "V" erhalten wird. Die Zwischenzonen 4 liegen radial innen, an der eigentlichen Nabe 5 des Radkörpers 1, wobei die Verbindung der Nabe 5 des Radkörpers 1 zu einer nicht näher gezeigten Radsatzwelle in herkömmlicher Weise in Form eines Preßsitzes bewerkstelligt wird.

Die Speichen 2 nehmen von ihrer Mitte 2' (entsprechend der Rad-Mittenebene) zu den beiden Radseiten hin in ihrer Breite, in Umfangsrichtung gemessen, ab, wie insbesondere aus Fig.2 ersichtlich ist, wobei ein allgemein sechseckiger Querschnitt erhalten wird, der sich zu den Enden der Speichen 2 hin verjüngt.

Das gezeigte Schienenrad besitzt sodann einen äußeren Radreifen 6, der in herkömmlicher Weise an einer Radseite mit einem Spurkranz 7 versehen ist. Dieser Radreifen 6 ist am Radkörper 1 über durch Metallgummifedern gebildete Federelemente 8 radial und axial federnd abgestützt, wobei hierfür mit dem Radreifen 6 Mitnehmer 9 fest verbunden sind, welche im Ausführungsbeispiel gemäß Fig.1 bis 4 durch einteilige Segmente 10 gebildet sind. Diese Mitnehmer-Segmente 10 sind mit dem Radreifen 6 über Bolzen 11 sowie einen Ring 12 an einer Radseite, vgl. insbesondere auch Fig.3 und 4, fest verbunden, wobei sich die Bolzen 11 durch an der Außenseite der einteiligen Segmente 10 befindliche Stege 13 sowie durch einen radial innenseitigen, flanschartigen Ansatz 14 am Radreifen 6 erstrecken und in Gewindebohrungen des Ringes 12 eingeschraubt sind. Dadurch wird eine form- und kraftschlüssige Verbindung zwischen den Mitnehmern 9 und dem Radreifen 6 erzielt, was ein Durchrutschen des Radreifens 6 relativ zu den Mitnehmern 9 verhindert. Die Mitnehmer 9 bzw. Segmente 10 füllen dabei jeweils, wie insbesondere aus Fig.1 ersichtlich ist, den Zwischenraum zwischen benachbarten Speichen 2 aus, und sie liegen über die in Ansicht (s. Fig.1) bogenförmig verlaufenden Federelemente 8 sowohl an den Flanken 3 der Speichen 2 als auch an der Kontur der Zwischenzonen 4 an. Diese Federelemente 8 sind hier im Querschnitt flach V-förmig, wie insbesondere aus Fig.2 und 3 hervorgeht, und zwar entsprechend der V-förmigen Profilierung der Speichen 2, der Zwischenzonen 4 und der Segmente 10 an den einander zugewandten Rändern, wie insbesondere Fig.2 und 3 zeigen, wobei hierdurch eine axiale Festlegung von Radkörper 1 und Radreifen 6 erzielt wird.

Die Mitnehmer-Segmente 10 können zwecks Gewichtseinsparung mit Ausnehmungen 15 bzw. Durchbrechungen 16 versehen sein, vgl. außer Fig.1 auch Fig.2 und 3. Aus Fig.1 und Fig.4 ist schließlich noch zu ersehen, daß die Speichen 2 radial außen stirnseitig mit Federweg-Begrenzungsanschlägen 17, in Form von stirnseitig eingeschraubten Bolzen 18, versehen sind, denen eine radial innere Fläche 19 des Radreifens 6 gegenüberliegt.

Diese Bolzen 18 bzw. genauer deren Köpfe sind zwischen dem flanschartigen Ansatz 14 und dem Ring 12 (s. Fig.4) mit geringem axialen Spiel aufgenommen, wodurch eine federnde axiale Beweglichkeit zwischen Radreifen 6 und Radkörper 1 gegeben ist, die durch das Anschlagen der Bolzen 18 am Ansatz 14 bzw. Ring 12 begrenzt wird. Auf diese Weise wird eine axiale Federwegbegrenzung für den Radreifen 6 am Radkörper 1 erzielt. In Umfangsrichtung sind diese Bolzen 18 jeweils zwischen den stirnseitigen Stegen 13 an den Mitnehmer-Segmenten 10 vorgesehen, wie sich auch aus Fig.1 ergibt.

Der Vollständigkeit halber sei noch erwähnt, daß in Fig.1 nur ein Mitnehmer-Segment 10 dargestellt wurde, und daß die Mitnehmer-Segmente in den übrigen vier segmentförmigen Zwischenräumen zwischen den Speichen 2 der Einfachheit halber weggelassen wurden. Selbstverständlich sind beim kompletten gummigefederten Schienenrad jedoch auch in diesen Bereichen Mitnehmer-Segmente 10 - in der gezeigten, in Umfangsrichtung symmetrischen Anordnung zwischen den Speichen 2 - vorgesehen.

Die Konizität der Berührungsflächen der Mitnehmer-Segmente 10 mit den Innenflächen des Radreifens 6, die durch die zueinander schräg verlaufenden Innenseiten des Ansatzes 14 bzw. des Ringes 12 definiert sind, ist entsprechend der während der Montage des Radreifens 6 aufzubringenden Federelement-Vorspannung auszulegen.

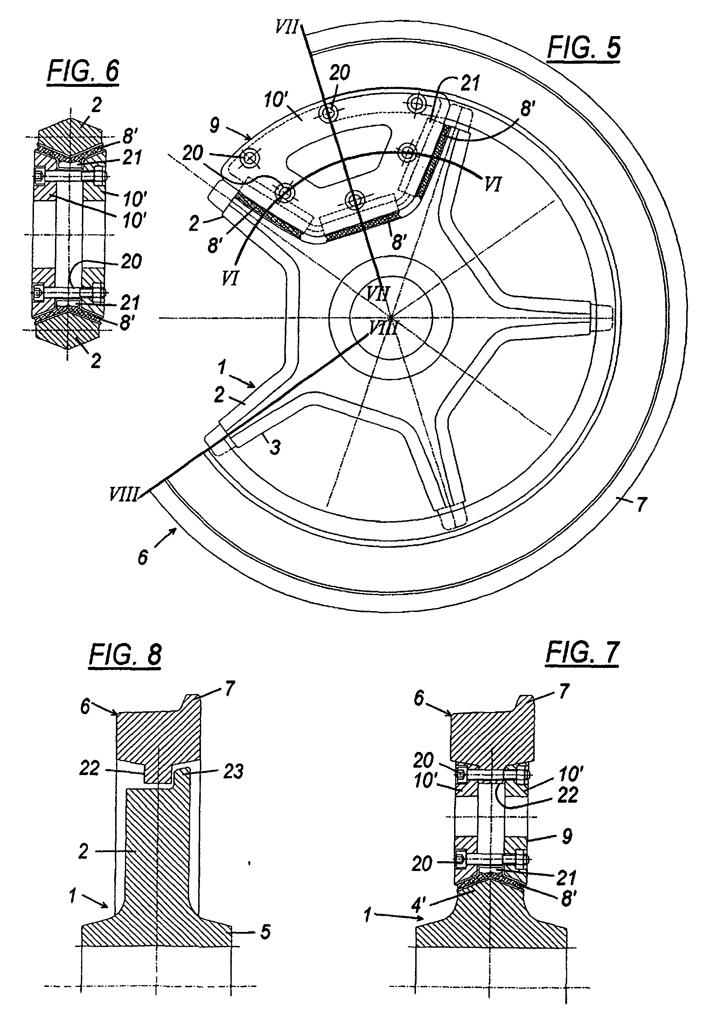

Das in den Fig.5 bis 8 dargestellte gummigefederte Schienenrad entspricht im prinzipiellen Aufbau jenem gemäß den Fig.1 bis 4, so daß sich die nachfolgende Beschreibung dieses Schienenrades gemäß Fig.5 bis 8, um Wiederholungen zu vermeiden, im wesentlichen auf die Unterschiede beschränken kann. Einer dieser Unterschiede liegt dabei darin, daß die Zwischenzonen 4' zwischen den Speichen 2 des sternförmigen Radkörpers 1 in Ansicht geradlinig verlaufen (s. Fig.5), und daß dementsprechend drei kürzere, geradlinige Federelemente 8' (bei denen es sich wiederum um Metallgummifedern handelt) zwischen jeweils einem Mitnehmer 9 und den einander zugekehrten Flanken 3 einander benachbarter Speichen 2 bzw. der Zwischenzone 4' angeordnet sind.

Ein weiterer Unterschied besteht hier darin, daß die Mitnehmer 9 jeweils aus zwei Segmentteilen oder -hälften 10' gebildet sind, s. insbesondere auch Fig.6 und 7, wobei diese Segmentteile 10' mit Hilfe von Bolzen 20 miteinander verbunden sind. Die Segmentteile 10' können dabei zueinander symmetrisch angeordnete, gleich ausgebildete Platten sein, die durch Stege 21, 22 an den Scheiteln der Federelemente 8' (s. Fig.6 und 7) bzw. an der radialen Innenseite des Radreifens 6 auf Distanz gehalten sind.

Wie weiters aus Fig.8 zu erkennen ist, können die Speichen 2 z.B. auf jener Radseite, auf der der Radreifen 6 mit dem Spurkranz 7 versehen ist, mit einer stirnseitigen radialen, unsymmetrischen Verlängerung 23 versehen sein, die zur axialen Federwegbegrenzung vorgesehen ist. Um auch in der anderen Richtung eine axiale Federwegbegrenzung vorzusehen, kann ein entsprechender Anschlag, analog zur Verlängerung 23, auf der anderen Radseite am Ende der Speiche 2 befestigt werden (nicht gezeigt).

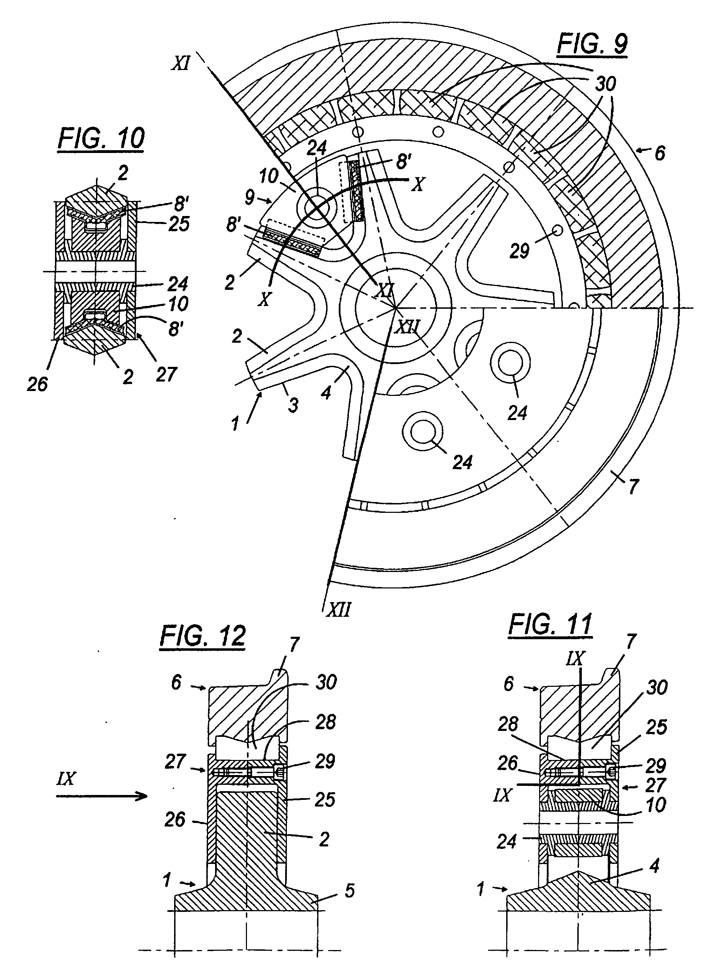

Beim gummigefederten Schienenrad gemäß Fig.9 bis 12 sind die Mitnehmer 9 bzw. Segmente 10 - die hier wiederum einteilig sind - nur an den jeweils einander zugewandten Flanken 3 der Speichen 2 über geradlinige Federelemente 8' in Form von Metallgummifedern abgestützt. In axialen (d.h. achsparallelen) Bohrungen der Segmente 10 sitzen die Hälften von Drehzapfen 24, die außen mit aus Fig.10 und 11 ersichtlichen Bünden an den Segmenten 10 anliegen und Ringwände 25, 26 auf Distanz halten. Die Ringwände 25 bzw. 26 besitzen einen entsprechenden Lochkreis, mit kreisförmigen Löchern, zum Einrasten der Drehzapfen 24 der Segmente 10, um so eine momentenfreie Mitnahme zwischen den Segmenten 10 und den Ringwänden 25, 26 sicherzustellen. Die Ringwände 25, 26 sind weiters mit geringem Spiel in Abstand von den Seiten der Speichen 2 angeordnet, s. Fig.12, um so eine axiale Federwegbegrenzung sicherzustellen. Die Ringwände 25, 26 bilden zusammen einen im Radialschnitt U-förmigen Felgenring 27, s. insbesondere Fig.11 und 12, wobei im Bereich des U-Steges 28 dieses Felgenringes 27 eine axiale Verschraubung mit Hilfe von Bolzen 29 vorgesehen ist. Der geteilte Felgenring 27, mit den Ringwänden 25, 26, ermöglicht somit - zusammen mit den geteilten Drehzapfen 24 - eine problemlose Montage bzw. Demontage des Schienenrades gemäß Fig.9 bis 12.

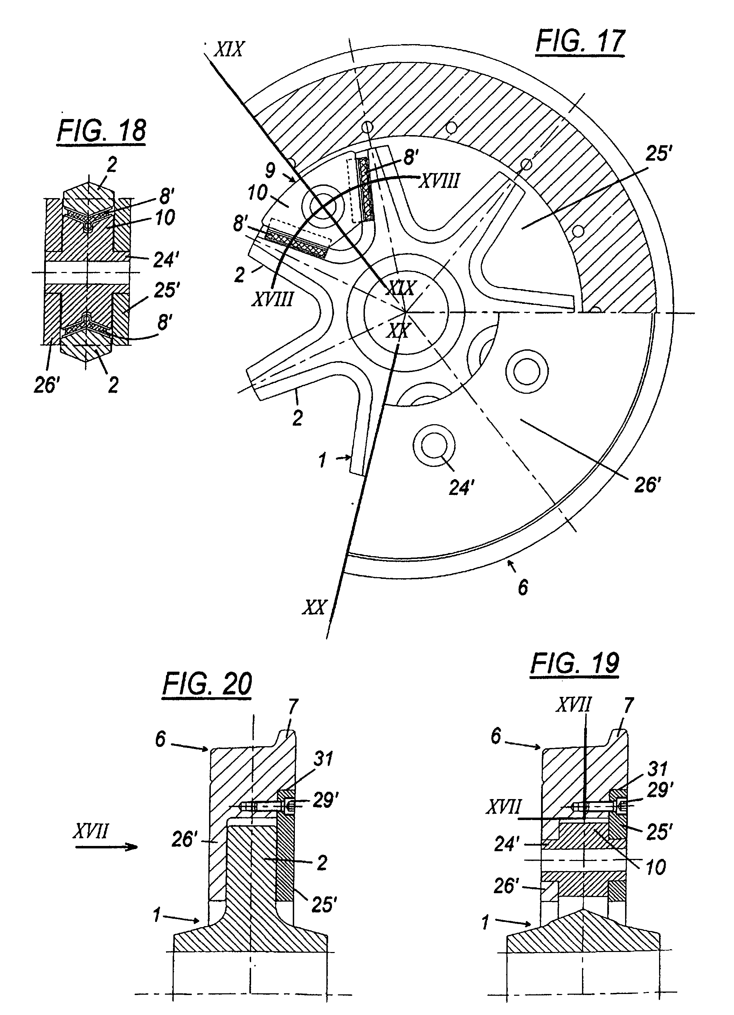

Die Drehzapfen 24. sind im Ausführungsbeispiel gemäß Fig.9 bis 12 als gesonderte Komponenten veranschaulicht worden, es ist jedoch auch denkbar, die Segmente 10 mit entsprechenden Drehzapfen-artigen axialen Vorsprüngen in einem Stück herzustellen, an deren äußeren Enden dann die Ringwände 25, 26 des geteilten Felgenringes 27 axial aufgeschoben werden (vgl. auch die Fig.18 bis 20; 21; 22).

Die Verbindung vom Felgenring 27 zum Radreifen 6 erfolgt im Ausführungsbeispiel gemäß Fig.9 bis 12 über in Umfangsrichtung mit Abständen aneinandergereihte Gummikörper 30 in an sich herkömmlicher Art und Weise, vgl. etwa die US 3 980 333 A.

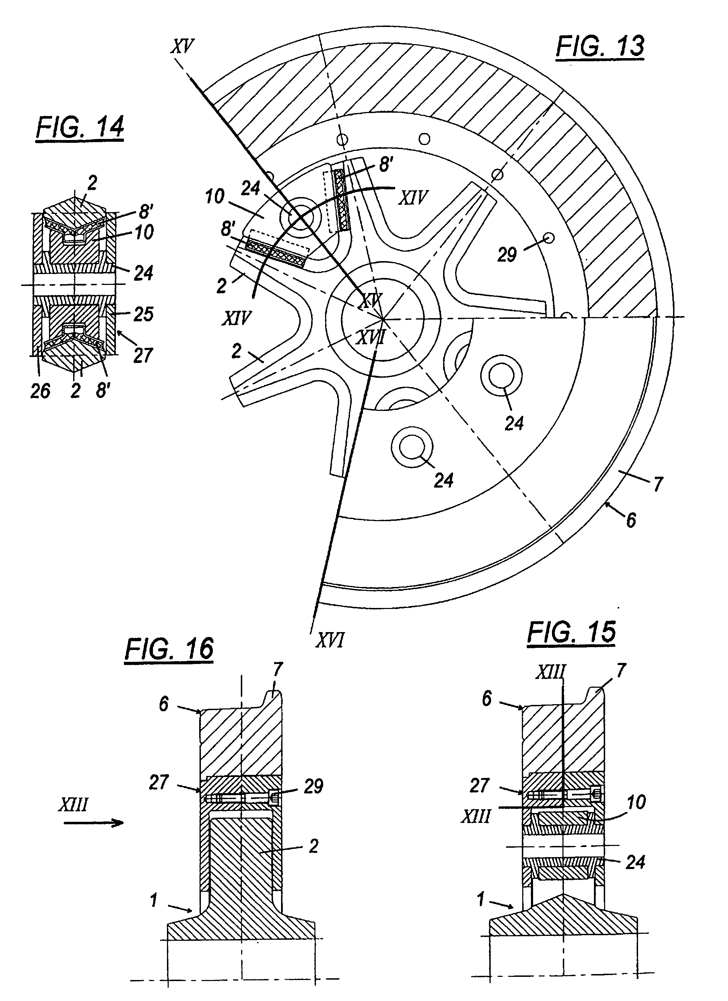

In Abweichung hiervon kann jedoch, wie beim gummigefederten Schienenrad gemäß Fig.13 bis 16 gezeigt, der Radreifen 6 in einem klassischen Schrumpfsitz auf der Außenseite des Felgenringes 27 sitzen. Im übrigen entspricht das Schienenrad gemäß Fig.13 bis 16 völlig dem Schienenrad gemäß Fig.9 bis 12, so daß sich eine neuerliche Beschreibung hiervon erübrigen kann.

Beim gummigefederten Schienenrad gemäß den Fig.17 bis 20 ist, abweichend von jenem gemäß Fig.13 bis 16, nur eine gesonderte Ringwand 25' für die Montage bzw. Demontage des Radreifens 6 am sternförmigen Radkörper vorgesehen. Auf der anderen Radseite ist der Radreifen 6 mit einem relativ breiten flanschartigen Ansatz 26' (als Gegenstück zur gesonderten Ringwand 26 gemäß Fig.9 bis 12 oder aber Fig.13 bis 16) versehen. Die Ringwand 25' ist am Radreifen 6 mit Hilfe von axialen Bolzen 29' festgeschraubt. Hierfür ist am Radreifen 6 ein Absatz 31 vorgesehen, so daß eine bündige Anordnung erzielt werden kann.

Ein anderer Unterschied ist darin gelegen, daß beim Schienenrad gemäß Fig.17 bis 20 keine gesonderten Drehzapfen 24 vorgesehen sind, sondern Drehzapfen-artige axiale Vorsprünge 24', s. insbesondere Fig.18 und 19, die in die Öffnungen des Ansatzes 26' bzw. der Ringwand 25' eingreifen. Die Innenflächen des Radreifen-Ansatzes 26' wie auch der Ringwand 25' dienen wie bei den beiden vorhergehend erläuterten Ausführungsformen, gemäß Fig.9 bis 12 bzw. Fig.13 bis 16, als innere axiale Federwegbegrenzung für die Speichen 2.

Abweichend von der Verschraubung mit Hilfe der Bolzen 29' wäre es auch denkbar, im Bereich der Drehzapfen-Vorsprünge 24' eine entsprechende Verschraubung vorzusehen, wodurch ebenfalls eine feste Verbindung zwischen den Segmenten 10 und dem Radreifen 6 erzielt werden kann.

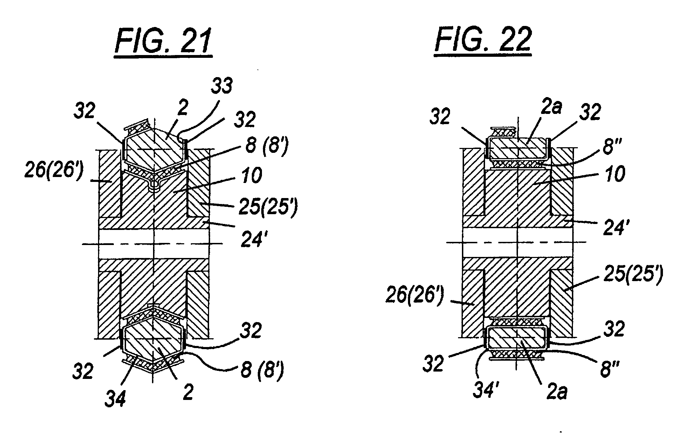

Anstatt der im Querschnitt V-förmigen, einteiligen Federelemente 8 bzw. 8' können selbstverständlich auch den Schenkeln des "V" entsprechende getrennte Federstreifen verwendet werden, im Prinzip ähnlich wie dies in der DE 44 30 342 A - dort allerdings in einer Umfangsanordnung - gezeigt ist. Darüber hinaus können dort, wo eine Begrenzung der Relativbewegung zwischen Radkörper 1 und Radreifen 6 in axialer Richtung durch Ringwände 25, 26 bzw. 25', 26' erfolgt, auch im Querschnitt geradlinige Federelemente vorgesehen werden, vgl. auch die nachfolgend zu beschreibende Fig.22.

In der Ausführungsform gemäß Fig.21 (die eine Modifikation der Fig.18 darstellt, wobei jedoch entsprechende Modifikationen auch bei den vorhergehenden Ausführungsformen, gemäß Fig.10 oder Fig.14, denkbar sind) sind zur Verringerung der Reibung zwischen den Speichen 2 und den Ringwänden 25 (bzw. 25') und 26 (bzw. 26') beim Einfedern des Radkörpers relativ zum Radreifen an beiden Seiten der Speichen 2, d.h. an beiden Radseiten, Seitengleitelemente 32 angebracht, die plattenförmig ausgebildet sind und aus einem selbstschmierenden bzw. verschleißarmen Material bestehen. Diese Seitengleitelemente 32, die als axiale Anschläge wirken, sind beispielsweise, wie in Fig.21 rechts oben gezeigt, auf verlängerten und um die jeweilige Speiche 2 herum abgewinkelten Trägerblechen 33 der Metallgummifedern, mit den Federelementen 8 bzw. 8', angebracht. Anstattdessen können diese Seitengleitelemente 32 auch auf Sechskant-Rohren 34 sitzen, die als Träger sowohl für diese Seitengleitelemente 32 als auch für die eigentlichen Federelemente 8 bzw. 8' dienen, und die auf die Speichen 2 radial aufgeschoben sind. Dabei können sich diese Rohre 34 im Querschnitt vergleichbar den Speichen 2 radial auswärts verjüngen.

In Fig.22 ist eine demgegenüber insofern vereinfachte Ausführungsform gezeigt, als hier anstatt von Sechskant-Rohren 34 Vierkant-Rohre 34' als Träger für die Federelemente 8" und die Seitengleitelemente 32 vorgesehen sind. Die Federelemente 8" können dabei einfach im Querschnitt geradlinig verlaufend ausgebildet sein, was ihre Herstellung zusätzlich vereinfacht. In entsprechender Weise sind hier die Speichen 2a anstatt im Querschnitt sechseckig im Querschnitt rechteckig, was ebenfalls zu einer Vereinfachung in der Herstellung führt. Eine derartige einfache, geradlinige Ausbildung der Federelemente 8" und entsprechend geradlinige Konturierung der Speichen 2a sowie selbstverständlich der nicht gezeigten Zwischenzone und weiters auch der Mitnehmer 9 bzw. Segmente 10 an ihren den Speichen 2a zugewandten Schmalseiten ist hier deshalb möglich, weil eine Begrenzung der axialen Relativbewegung zwischen Radkörper (samt Speichen 2a) einerseits und Radreifen (mit Mitnehmer-Segmenten 10 und Ringwänden 25 bzw. 25', 26 bzw. 26') andererseits durch die genannten Ringwände erfolgt, so daß von der in den vorhergehenden Figuren gezeigten V-förmigen Anordnung oder Ausbildung der Federelemente, mit der entsprechenden Ausbildung der Speichen und Mitnehmer-Segmente, Abstand genommen werden kann.

Der Stromübergang zwischen Radreifen 6 und Radkörper 1 wird im übrigen bei allen Ausführungsformen in an sich herkömmlicher Weise durch konventionelle Kupferlitzenkabel mit zwei Kerbkabelschuhen sichergestellt, die an geeigneten Stellen aufgeschraubt werden. Dies ist, da an sich herkömmliche Technik, jedoch in der Zeichnung nicht näher veranschaulicht.

## Patentansprüche

1. Gummigefedertes Schienenrad mit einem inneren Radkörper (1), der Speichen (2) aufweist, und mit einem äußeren Radreifen (6), der mit dem Radkörper (1) über Federelemente (8; 8') verbunden ist, und mit Mitnehmern (9), die mit dem Radreifen (6) verbunden sind, **dadurch gekennzeichnet, daß** die Mitnehmer (9) jeweils zwischen zwei Speichen (2) des sternförmigen Radkörpers (1) ragen, und daß die Federelemente (8; 8') unter federnder Abstützung der Mitnehmer (9) an den Flanken (3) der Speichen (2) anliegen.

2. Gummigefedertes Schienenrad nach Anspruch 1, **dadurch gekennzeichnet, daß** die Speichen (2) zumindest in jenen Bereichen, an denen die Federelemente (8; 8') anliegen, radial auswärts in ihrer Breite, in Umfangsrichtung gesehen, abnehmen.

3. Gummigefedertes Schienenrad nach Anspruch 1 oder 2, **dadurch gekennzeichnet, daß** der Radkörper (1) die Mitnehmer (9) auch in den Zwischenzonen (4; 4') zwischen seinen Speichen (2) über Federelemente (8; 8') abstützt .

4. Gummigefedertes Schienenrad nach Anspruch 3, **dadurch gekennzeichnet, daß** die Zwischenzonen (4') allgemein geradlinig verlaufen und die Mitnehmer (9) über gesonderte Federelemente (8') abstützen.

5. Gummigefedertes Schienenrad nach Anspruch 3, **dadurch gekennzeichnet, daß** die Zwischenzonen (4) jeweils bogenförmig verlaufen und stetig in die benachbarten Speichen (2) übergehen.

6. Gummigefedertes Schienenrad nach Anspruch 5, **dadurch gekennzeichnet, daß** jeweils ein bogenförmig entlang den einander zugewandten Flanken (3) der Speichen (2) sowie der zugehörigen Zwischenzone (4) verlaufendes Federelement (8) vorgesehen ist.

7. Gummigefedertes Schienenrad nach einem der Ansprüche 1 bis 6, **dadurch gekennzeichnet, daß** die Mitnehmer (9) durch mit dem Radreifen (6) verbundene, insbesondere direkt verschraubte, Segmente (10; 10') gebildet sind.

8. Gummigefedertes Schienenrad nach Anspruch 7, **dadurch gekennzeichnet, daß** die einteilig ausgebildeten Segmente (10) mit einem radial äußeren Steg-Fortsatz (13) an einem flanschartigen, radial innenseitigen Ansatz (14) des Radreifens (6) seitlich anliegen und durch einen auf der gegenüberliegenden Seite am Steg-Fortsatz (13) anliegenden Ring (12) in Position gehalten sind.

9. Gummigefedertes Schienenrad nach Anspruch 8, **dadurch gekennzeichnet, daß** die Speichen (2) mit stirnseitigen Federweg-Begrenzungsanschlägen (17), insbesondere mit stirnseitig eingeschraubten Bolzen (18), versehen sind, die zwischen dem flanschartigen Ansatz (14) des Radreifens (6) und dem Ring (12) aufgenommen sind und im Ruhezustand in radialem Abstand von der radialen Innenseite (19) des Radreifens (6) enden.

10. Gummigefedertes Schienenrad nach einem der Ansprüche 1 bis 7, **dadurch gekennzeichnet, daß** jeder Mitnehmer (9) durch zwei miteinander und mit dem Radreifen (6) verbundene, insbesondere verschraubte, Segmentteile (10') gebildet ist.

11. Gummigefedertes Schienenrad nach Anspruch 10, **dadurch gekennzeichnet, daß** die Segmentteile (10') durch Stege (21, 22) an der radialen Innenseite des Radreifens (6) sowie an zumindest einigen Federelementen (8'), an deren den Segmentteilen (10') zugekehrter Seite, in Abstand voneinander gehalten sind.

12. Gummigefedertes Schienenrad nach Anspruch 11, **dadurch gekennzeichnet, daß** an der radial äußeren Stirnseite der Speichen (2) auf einer Radseite, vorzugsweise auf jener Radseite, auf der der Radreifen (6) mit einem Spurkranz (7) versehen ist, eine radiale Verlängerung (23) in axialem Abstand vom Radreifen-Steg (22) vorgesehen ist, die im Betrieb zur axialen Federwegbegrenzung gegen den Radreifen-Steg (22) anlegbar ist.

13. Gummigefedertes Schienenrad nach einem der Ansprüche 1 bis 7, **dadurch gekennzeichnet, daß** die Mitnehmer (9) oder. Segmente (10) über zumindest eine Ringwand (25, 26; 25', 26') mit dem Radreifen (6) verbunden sind.

14. Gummigefedertes Schienenrad nach Anspruch 13, **dadurch gekennzeichnet, daß** die Segmente (10) mit ihnen einstückige, insbesondere Drehzapfen-artige, axiale Vorsprünge (24') haben oder auf gesonderten Drehzapfen (26) sitzen, und diese axialen Vorsprünge (24') oder Drehzapfen (24) in axialen Bohrungen der Ringwand (25, 26; 25', 26') aufgenommen sind.

15. Gummigefedertes Schienenrad nach Anspruch 13 oder 14, **dadurch gekennzeichnet, daß** die Ringwand (25') mit dem Radreifen (6) im Bereich eines Absatzes (31) an diesem verschraubt ist.

16. Gummigefedertes Schienenrad nach Anspruch 13 oder 14, **dadurch gekennzeichnet, daß** zwei zueinander allgemein parallele Ringwände (25, 26), je eine an einer Radseite, vorgesehen sind, die zusammen einen im Querschnitt allgemein U-förmigen Felgenring (27) bilden und hierfür im Bereich des U-Steges (28) axial miteinander verbunden, insbesondere verschraubt, sind.

17. Gummigefedertes Schienenrad nach einem der Ansprüche 13 bis 16, **dadurch gekennzeichnet, daß** die oder zumindest eine Ringwand (25, 26; 25', 26') eine axiale Federweg-Begrenzungswand für die Speichen (2) bildet.

18. Gummigefedertes Schienenrad nach einem der Ansprüche 13 bis 17, **dadurch gekennzeichnet, daß** zwischen den Speichen (2; 2') und der oder den Ringwänden (25, 26; 25', 26') Seitengleitelemente (32) angeordnet sind.

19. Gummigefedertes Schienenrad nach Anspruch 18, **dadurch gekennzeichnet, daß** die Seitengleitelemente (32) zusammen mit den Federelementen (8; 8'; 8") jeweils ein sich, gegebenenfalls radial auswärts verjüngendes, auf die entsprechende Speiche (2) aufgeschobenes Rohr (34; 34') bilden.

20. Gummigefedertes Schienenrad nach einem der Ansprüche 13 bis 19, **dadurch gekennzeichnet, daß** die Speichen (2') im Querschnitt rechteckig sind und die Federelemente (8") im Querschnitt geradlinig verlaufen.

21. Gummigefedertes Schienenrad nach einem der Ansprüche 1 bis 19, **dadurch gekennzeichnet, daß** die Speichen (2) eine sich von ihrer Mitte (2') zu den beiden Radseiten hin verringernde Dicke haben, wobei ihre Flanken eine flache V-förmige konvexe Profilierung aufweisen und die Federelemente (8; 8'), im Querschnitt gesehen, ebenfalls V-förmig angeordnet oder. ausgebildet sind.

## Claims

1. A resilient railway wheel comprising an inner wheel body (1) provided with spokes (2) and an outer wheel tyre (6) connected to the wheel body (1) via resilient elements (8; 8'), and engaging pieces (9) connected to the wheel tyres (6), **characterised in that** the engaging pieces (9) each extend to between two spokes (2) of the star-shaped wheel body (1) and that the resilient elements (8, 8') abut the flanks (3) of the spokes (2) thereby resiliently supporting the engaging pieces (9).

2. A resilient railway wheel according to claim 1, **characterised in that** the spokes (2) decrease in width radially outwardly, viewed in peripheral direction, at least in those regions in which the resilient elements (8; 8') abut.

3. A resilient railway wheel according to claim 1 or 2, **characterised in that** the wheel body (1) supports the engaging pieces (9) also in the intermediate zones (4; 4') between its spokes (2) via resilient elements (8; 8').

4. A resilient railway wheel according to claim 3, **characterised in that** the intermediate zones (4') extend generally along a straight line and support the engaging pieces (9) via separate resilient elements (8').

5. A resilient railway wheel according to claim 3, **characterised in that** the intermediate zones (4) each extend arcuately, merging continuously into the adjacent spokes (2).

6. A resilient railway wheel according to claim 5, **characterised in that** one respective resilient element (8) is provided which extends arcuately along the facing flanks (3) of the spokes (2) as well as along the associated intermediate zone (4).

7. A resilient railway wheel according to any one of claims 1 to 6, **characterised in that** the engaging pieces (9) are formed by segments (10; 10') connected, in particularly directly screwed, to the wheel tyres (6).

8. A resilient railway wheel according to claim 7, **characterised in that** the integral segments (10) have a radially outer web-projection (13) laterally abutting against a flange-like, radially inner shoulder (14) of the wheel tyre (6) and are maintained in their position by a ring (12) abutting against the web-projection (13) on the opposite side thereof.

9. A resilient railway wheel according to claim 8, **characterised in that** the spokes (2) are provided with end-side resilient-path delimiting abutments (17), in particular with pins (18) screwed in at the end side, which pins are accommodated between the flange-like shoulder (14) of the wheel tyre (6) and the ring (12) and, in the at-rest position, end at a radial distance from the radial inner side (19) of the wheel tyre (6).

10. A resilient railway wheel according to any one of claims 1 to 7, **characterised in that** each engaging piece (9) is formed by two segment parts (10') interconnected and connected to the wheel tyre (6), in particular screwed thereto.

11. A resilient railway wheel according to claim 10, **characterised in that** the segment parts (10') are held at a distance from each other by webs (21, 22) on the radial inner side of the wheel tyre (6) as well as on at least a few resilient elements (8') at their side facing the segment parts (10').

12. A resilient railway wheel according to claim 11, **characterised in that** a radial extension (23) is provided on the radial outer end side of the spokes (2) on one wheel side, preferably on that wheel side on which the wheel tyre (6) is provided with a wheel flange (7), at an axial distance from the wheel tyre web (22), which radial extension during operation can be applied against the wheel tyre web (22) so as to delimit the axial resilient path.

13. A resilient railway wheel according to any one of claims 1 to 7, **characterised in that** the engaging pieces (9) or segments (10) are connected to the wheel tyre (6) via at least one annular wall (25, 26; 25', 26').

14. A resilient railway wheel according to claim 13, **characterised in that** the segments (10) comprise integral, in particular pivot-type, axial projections (24') or are seated on separate pivots (26), and these axial projections (24') or pivots (24) are received in axial bores of the annular wall (25, 26; 25', 26').

15. A resilient railway wheel according to claim 13 or 14, **characterised in that** in the region of a step (31) provided on the wheel tyre, the annular wall (25') is screwed onto the latter.

16. A resilient railway wheel according to claim 13 or 14, **characterised in that** mutually generally parallel annular walls, one on one wheel side each, are provided which together form a rim ring (27) of generally U-shaped cross-section and for this purpose are axially interconnected, in particular screwed together, in the region of the U-web (28).

17. A resilient railway wheel according to any one of claims 13 to 16, **characterised in that** the or at least one annular wall (25, 26; 25', 26') form(s) an axial resilient-path delimiting wall for the spokes (2).

18. A resilient railway wheel according to any one of claims 13 to 17, **characterised in that** side sliding elements (32) are arranged between the spokes (2; 2') and the annular wall(s) (25, 26; 25', 26').

19. A resilient railway wheel according to claim 18, **characterised in that** the side sliding elements (32) together with the resilient elements (8; 8'; 8") each form an, optionally radially outwardly narrowing, tube (34; 34') slipped onto the respective spoke (2).

20. A resilient railway wheel according to any one of claims 13 to 19, **characterised in that** the spokes (2') are rectangular in cross-section and the resilient elements (8") extend along a straight line in cross-section.

21. A resilient railway wheel according to any one of claims 1 to 19, **characterised in that** the spokes (2) have a thickness decreasing from their middle (2') towards the two wheel sides, their flanks exhibiting a flat V-shaped convex section and the resilient elements (8; 8') also being arranged or designed in the shape of a V, viewed in cross-section.

## Revendications

1. Roue pour rail amortie élastiquement par du caoutchouc, comprenant un corps de roue interne (1), qui présente des rayons (2), et un bandage de roue externe (6), qui est relié au corps de roue (1) via des éléments élastiques (8; 8') et des entraîneurs (9), qui sont reliés au bandage de roue (6), **caractérisée en ce que** les entraîneurs (9) dépassent respectivement entre deux rayons (2) du corps de roue en étoile (1) et **en ce que** les éléments élastiques (8; 8') s'appliquent sur les flancs (3) des rayons (2) sous l'effet d'appui élastique des entraîneurs (9).

2. Roue pour rail amortie élastiquement par du caoutchouc selon la revendication 1, **caractérisée en ce que** les rayons (2) se réduisent en largeur radialement vers l'extérieur, en observant dans la direction périphérique, au moins dans les zones où les éléments élastiques (8; 8') s'appliquent.

3. Roue pour rail amortie élastiquement par du caoutchouc selon la revendication 1 ou 2, **caractérisée en ce que** le corps de roue (1) appuie l'entraîneur (9) également dans les zones intermédiaires (4; 4') entre ses rayons (2) via des éléments élastiques (8; 8').

4. Roue pour rail amortie élastiquement par du caoutchouc selon la revendication 3, **caractérisée en ce que** les zones intermédiaires (4') s'étendent généralement en ligne droite et les entraîneurs (9) s'appuient sur des éléments élastiques séparés (8').

5. Roue pour rail amortie élastiquement par du caoutchouc selon la revendication 3, **caractérisée en ce que** les zones intermédiaires (4) s'étendent respectivement en arc et se fondent en continu dans les rayons adjacents (2).

6. Roue pour rail amortie élastiquement par du caoutchouc selon la revendication 5, **caractérisée en ce que**, respectivement, il est prévu un élément élastique (8) s'étendant en forme d'arc le long des flancs (3), tournés l'un vers l'autre, des rayons (2) ainsi que de la zone intermédiaire associée (4).

7. Roue pour rail amortie élastiquement par du caoutchouc selon l'une quelconque des revendications 1 à 6, **caractérisée en ce que** les entraîneurs (9) sont formés par des segments (10; 10') reliés au bandage de roue (6), en particulier directement vissés sur celui-ci.

8. Roue pour rail amortie élastiquement par du caoutchouc selon la revendication 7, **caractérisée en ce que** les segments (10) formés dune seule pièce avec un prolongement nervuré externe radial (13) s'appliquent latéralement sur une paillie (14) du bandage de roue (6) en forme de bride s'étendant radialement vers l'intérieur et sont maintenus en place par un anneau (12) s'appliquant sur le côté opposé du prolongement nervuré (13).

9. Roue pour rail amortie élastiquement par du caoutchouc selon la revendication 8, **caractérisée en ce que** les rayons (2) sont pourvus de butées frontales (17) de limitation de trajet élastique, en particulier de boulons vissés côté frontal (18), qui sont reçus entre la paillie en forme de bride (14) du bandage de roue (6) et l'anneau (12) et se terminent, à l'état de repos, à distance radiale du côté interne radial (19) du bandage de roue (6).

10. Roue pour rail amortie élastiquement par du caoutchouc selon l'une quelconque des revendications 1 à 7, **caractérisée en ce que** chaque entraîneur (9) est formé par deux parties de segment (10') reliées l'une à l'autre et au bandage de roue (6), en particulier vissées.

11. Roue pour rail amortie élastiquement par du caoutchouc selon la revendication 10, **caractérisée en ce que** les parties de segment (10') sont maintenues à distance l'une de l'autre par des nervures (21, 22) sur le côté interne radial du bandage de roue (6) ainsi que sur au moins certains éléments élastiques (8'), sur leur côté tourné vers les parties de segment (10').

12. Roue pour rail amortie élastiquement par du caoutchouc selon la revendication 11, **caractérisée en ce qu'**il est prévu, sur le côté frontal radial externe des rayons (2), sur un côté de la roue, de préférence sur le côté de la roue sur lequel le bandage de roue (6) est pourvu d'un boudin (7), un prolongement radial (23) à distance axiale de la nervure (22) du bandage de roue, ledit prolongement pouvant être appliqué contre la nervure (22) du bandage de roue en service pour limiter axialement le trajet élastique.

13. Roue pour rail amortie élastiquement par du caoutchouc selon l'une quelconque des revendications 1 à 7, **caractérisée en ce que** les entraîneurs (9) ou les segments (10) sont reliés au bandage de roue (6) via au moins une paroi annulaire (25, 26; 25', 26').

14. Roue pour rail amortie élastiquement par du caoutchouc selon la revendication 13, **caractérisée en ce que** les segments (10) ont des saillies axiales (24') qui en font partie intégrante, en particulier en forme de tourillons, ou s'appuient sur des tourillons séparés (26), et ces saillies axiales (24') ou ces tourillons (24) sont reçus dans des perçages axiaux de la paroi annulaire (25,26; 25', 26').

15. Roue pour rail amortie élastiquement par du caoutchouc selon la revendication 13 ou 14, **caractérisée en ce que** la paroi annulaire (25') avec le bandage de roue (6) dans la zone d'un épaulement (31) est vissée sur celui-ci.

16. Roue pour rail amortie élastiquement par du caoutchouc selon la revendication 13 ou 14, **caractérisée en ce qu'**il est prévu deux parois annulaires (25, 26) généralement parallèles l'une à l'autre, chacune pour un côté de roue, qui forment conjointement un anneau de jante (27) généralement en U en coupe transversale et sont reliées l'une à l'autre axialement à cet effet dans la zone de la nervure en U (28), en particulier vissées.

17. Roue pour rail amortie élastiquement par du caoutchouc selon l'une quelconque des revendications 13 à 16, **caractérisée en ce que** la ou au moins une paroi annulaire (25, 26; 25', 26') forme une paroi axiale limitant le trajet élastique pour les rayons (2).

18. Roue pour rail amortie élastiquement par du caoutchouc selon l'une quelconque des revendications 13 à 17, **caractérisée en ce que** des éléments glissants latéraux (32) sont agencés entre les rayons (2; 2') et la ou les parois annulaires (25, 26; 25', 26').

19. Roue pour rail amortie élastiquement par du caoutchouc selon la revendication 18, **caractérisée en ce que** les éléments glissants latéraux (102) forment conjointement avec les éléments élastiques (8; 8'; 8") respectivement un tube (34; 34') s'amincissant éventuellement radialement vers l'extérieur et glissé sur le rayon correspondant (32).

20. Roue pour rail amortie élastiquement par du caoutchouc selon l'une quelconque des revendications 13 à 19, **caractérisée en ce que** les rayons (2') sont rectangulaires en coupe transversales et les éléments élastiques (8") s'étendent en ligne droite en coupe transversale.

21. Roue pour rail amortie élastiquement par du caoutchouc selon l'une quelconque des revendications 1 à 19, **caractérisée en ce que** les rayons (2) ont une épaisseur diminuant de leur centre (2') aux deux côtés de la roue, leurs flancs présentant un profilage convexe plat en forme de V et les éléments élastiques (8; 8'), vus en coupe transversale, étant agencés ou conformés également en V.
